**Europäisches Patentamt**

**European Patent Office**

**Office européen des brevets**

(19)

(11) Veröffentlichungsnummer : **0 136 967**
**B1**

(12)

# EUROPÄISCHE PATENTSCHRIFT

(45) Veröffentlichungstag der Patentschrift :
**15.03.89**

(21) Anmeldenummer : **84730091.0**

(22) Anmeldetag : **24.08.84**

(51) Int. Cl.⁴ : **H 01 G   9/20**

(54) Photoelektrochemische Solarzelle und Verfahren zur Herstellung einer Arbeitselektrode für Solarzellen.

(30) Priorität : 24.08.83 DE 3330902
          22.12.83 DE 3347129

(43) Veröffentlichungstag der Anmeldung :
**10.04.85 Patentblatt 85/15**

(45) Bekanntmachung des Hinweises auf die Patenterteilung : **15.03.89 Patentblatt 89/11**

(84) Benannte Vertragsstaaten :
**AT BE CH DE FR GB IT LI LU NL SE**

(56) Entgegenhaltungen :
APPLIED PHYSICS LETTERS, Band 40, Nr. 8, 15. April 1982, Seiten 727-728, America Institute of Physics, New York, US; Y. MIROVSKY u.a.: "n-CuInSe2/poly-sulfide photoelectrochemical solar cells"
JOURNAL OF ELECTROCHEMICAL SOCIETY, Band 125, Nr. 5, Mai 1978, Seiten 831-832, Princeton, US; M. ROBBINS u.a.: "CuInS2 liquid junction solar cells"
NATURE, Band 305, 13. Oktober 1983, Seiten 615-616, London, GB; S. MENEZES u.a.: "Efficient and stable solar cell by interfacial film formation"
CHEMICAL ABSTRACTS, Band 100, Nr. 24, Juni 1984, Seite 186, Nr. 195073q, Columbus, Ohio, US; K.J. BACHMANN u.a.: "Relation between surface chemistry and solar-cell performance of copper indium selenide (CuInSe2) single-crystal electrodes" & SURF. SCI. 1984, 138(2-3), 475-487
CHEMICAL ABSTRACTS, Band 92, Nr. 22, Juni 1980, Seite 145, Nr. 183636d, Columbus, Ohio, US; L.A. HARRIS u.a.: "Corrosion suppression on rutile anodes by high-energy redox reactions" & PROC. - ELECTROCHEM. SOC. 1977, 77-6

(73) Patentinhaber : **Hahn-Meitner-Institut Berlin Gesellschaft mit beschränkter Haftung**
**Glienicker Str. 100**
**D-1000 Berlin 39 (DE)**

(72) Erfinder : **Menezes, Shalini**
**Loschwitzer Weg 31**
**D-1000 Berlin 20 (DE)**
Erfinder : **Lewerenz, Hans-Joachim, Dr. rer.nat.**
**Pacelliallee 15 A**
**D-1000 Berlin 33 (DE)**
Erfinder : **Bachmann, Klaus, Prof. Dr.**
**8708 Langtree Lane**
**Raleigh N. C. 27612 (US)**

(74) Vertreter : **Wolff, Konrad**
**Heinrich-Hertz-Institut für Nachrichtentechnik Berlin GmbH Einsteinufer 37**
**D-1000 Berlin 10 (DE)**

## Beschreibung

Die Erfindung bezieht sich auf eine photoelektrochemische Solarzelle (PECS) mit einem Wirkungsgrad von etwa 10 % für die Umwandlung von Lichtenergie in elektrische Energie und einer unter diesem Aspekt ausgewählten Paarung von Halbleitermaterial für die Arbeitselektrode und Zusammensetzung der Elektrolytflüssigkeit, sowie auf ein Verfahren zur Herstellung einer Halbleiter-Arbeitselektrode für Solarzellen.

Der Vorteil photoelektrochemischer Solarzellen gegenüber photovoltaischen Systemen besteht darin, daß die Kontaktbildung wesentlich einfacher ist. Der Übergang : Festkörper/Flüssigkeit stellt kein Problem für die elektrische Verbindung dar und führt auch nicht zu unerwünschten mechanischen Spannungen zwischen Materialien mit unterschiedlichem Kristallaufbau. Unangenehm ist allerdings die Photokorrosion des Halbleiters. Diese stellt einen konkurrierenden Prozeß zur regenerativen Operation dar und beeinträchtigt die Stabilität einer photoelektrochemischen Solarzelle.

Bei bekannten Systemen photoelektrochemischer Solarzellen mit einem Wirkungsgrad von etwa 10 %, bei denen die Umwandlung von Sonnenenergie in elektrische Energie in kostengünstiger Weise erfolgen soll, sind allerdings häufig die Halbleiter bereits vom Ausgangsmaterial her teuer. Außerdem werden meistens giftige Elektrolytlösungen eingesetzt, und die Zellen müssen unter Luftabschluß gehalten werden, um eine Zersetzung der Lösung zu vermeiden. Hierzu gehören beispielsweise folgende bekannte Systeme :

— n-GaAs in wäßriger Selenid/Polyselenid Lösung (s. Appl. Phys. Lett. 33(6), 15. Sep. 1978, 521),
— n-GaAs$_{1-x}$P$_x$ in einem organischen Elektrolyten (s. Nature, Vol. 300 (23/30 Dec. 1982), 733),
— p-InP in stark saurer Vanadium/Salzsäure-Lösung (s. J. of the American Chemical Society, 1980 (102) 6555).

Auf dem Gebiet der Entwicklung von Halbleitermaterial mit immer geringeren Absorptionslängen für Strahlung im Sonnenlichtspektrum wird in jüngster Zeit — s. J. Electrochem. Soc., März 1983, Reviews and News Nr. 235 bis 237, Seiten 87 C, 88 C — auf CuInSe$_2$ hingewiesen. Es werden mögliche Verwendungen in großer Zahl erwähnt, in Nr. 237 auch photovoltaische Systeme, CuInSe$_2$/CdS, für Solarzellen.

Von diesem Wissensstand bereits ausgehend lag der Erfindung als Aufgabenstellung zugrunde, für eine photoelektrochemische Solarzelle eine Paarung : Halbleitermaterial/Elektrolytzusammensetzung zu finden, mit der der Wirkungsgrad bislang bekannter photoelektrochemischer Solarzellen erreicht wird, wobei aber das Ausgangsmaterial für die Halbleiter-Arbeitselektrode mit kürzerer Absorptionslänge nicht nur billiger als z. B. GaAs oder InP, sondern auch stabil gegen Photokorrosion sein soll, und weiterhin ein nicht toxischer Elektrolyt zum Einsatz kommen soll, der es auch erlaubt, ohne Luftabschluß zu arbeiten.

Dieses Ziel wird gemäß der Erfindung erreicht bezüglich der Arbeits-Elektrode durch eine ternäre Verbindung der Materialsysteme CuInSe$_2$ oder CuInS$_2$, einschließlich der Homogenitätsbereiche und in-situ erzeugter Oberflächenmodifizierungen dieser Verbindungen, und bezüglich der Elektrolytlösung durch eine Jod-Jodidlösung, vorzugsweise mit einem Stabilisator aus einem Übergangsmetallhalogenid. Bei dieser Paarung kommen beim Halbleiter vom Material her sowohl der vergleichsweise niedrige Preis als auch infolge der geringen Absorptionslänge und dementsprechend geringen erforderlichen Dicke des Halbleiterfilms mehr wirtschaftliche Vorteile voll zur Geltung. Von wesentlicher Bedeutung für die Erfindung sind darüber hinaus die technischfunktionellen Vorzüge, die sich darin zeigen, daß mit diesem Halbleitermaterial und der nicht toxischen Elektrolytlösung eine stabile Paarung für eine effiziente photoelektrochemische Solarzelle gelungen ist.

Für Ausführungsformen der Erfindung ist es vorteilhaft, ein- oder polykristallines Chalkopyrit-Halbleitermaterial für die Arbeitselektrode zu verwenden. Bei amorphem Material, das zwar noch billiger in der Herstellung ist, läßt sich der gewünschte Wirkungsgrad nicht erreichen. In Laborversuchen hat sich beispielsweise unpoliertes einkristallines n-CuInSe$_2$, (11$\overline{2}$) orientiert, als hervorragend geeignet erwiesen.

Für den Aufbau der Arbeitselektrode, die an einem Halteorgan so zu befestigen ist, daß das Licht möglichst senkrecht auf das Halbleiterplättchen trifft, kann bei Ausführungsformen der Erfindung die Kontaktierung vorteilhaft auf folgende Weise gebildet werden : Auf der Rückseite des Halbleiterplättchens wird eine Schicht Hg-In-Amalgam und darauf ein Ag-Kunstharz aufgebracht ; der Anschlußdraht wird an oder in der Ag-Kunstharzschicht befestigt. Die Seitenflächen und die Rückseite des kontaktierten Halbleiterplättchens können sodann mit einer Isoliermasse beschichtet werden, die auch korrosionsbeständig sein muß. Der Anschlußdraht, z. B. aus Kupfer, läßt sich in beliebiger Weise, ebenfalls elektrisch isoliert und korrosionsbeständig ummantelt, aus der Zelle herausführen. Als Ag-Kunstharz für die Kontaktierung kann die Epoxy-Masse der Firma 3 M, Typ 100, und als korrosionsbeständige, elektrisch isolierende Beschichtungsmasse ein handelsüblicher Silikon-Kautschuk verwendet werden.

Für den Einsatz einer solchen Arbeitselektrode in einer PECS sollte vor Immersion in die Elektrolytlösung eine komplett kontaktierte und mit Silikon-Kautschuk, bis auf das freizulassende « Fenster », ummantelte Arbeitselektrode mehrmals für 5 s mit Königswasser (3 Teile HCl, 1 Teil HNO$_3$) geätzt, dann mit ionendestilliertem H$_2$O abgespült, anschließend für 20 s in 0,2 M KCN getaucht und schließlich wiederum abgespült werden.

Ausführungsformen der Erfindung sollen, wie weiter oben bereits erwähnt, auch ohne Luftabschluß arbeiten können. Um dabei Gefährdungen durch chemische Wirkungen außerhalb der Zelle zu vermeiden, ist von wesentlicher Bedeutung für die Erfindung, daß die Elektrolytlösung nicht toxisch ist. Selbstverständlich soll sie den Anforderungen an die Paarung : Elektroden-Halbleitermaterial/Zusammensetzung des Elektrolyten genügen und soll schließlich auch noch bezüglich der Photokorrosion zu stabilen Verhältnissen führen. Alle diese Forderungen erfüllt eine Elektrolytlösung, die 2,5 M HJ, 1 M $CaJ_2$, 60 mM $J_2$ und 20 mM $CuJ$ in $H_2O$ enthält. Diese Zusammensetzung hat sich als besonders geeignet erwiesen ; andere Zusammensetzungen sowohl bezüglich der molaren Verhältnisse als auch bezüglich der Bestandteile als solche, insbesondere für das Übergangsmetallhalogenid als Stabilisator, die z. B. modifizierten Forderungen besser entsprechen, sollen hierdurch nicht ausgeschlossen sein und von der erfindungsgemäßen Lehre mit erfaßt werden.

Die Erfindung befaßt sich, wie eingangs bereits erwähnt ist, auch mit einem besonders angepaßten Verfahren zur Herstellung einer Arbeitselektrode für photoelektrochemische und photovoltaische Solarzellen. Dabei wird davon ausgegangen, daß ein einkristallines Chalkopyrit-Halbleitermaterial, insbesondere $CuInSe_2$, oder ein polykristallines Chalkopyrit-Halbleitermaterial mehrfach, insbesondere mit Königswasser geätzt und anschließend insbesondere mit ionendestilliertem Wasser abgespült wird, wobei sich ein Film auf der Arbeitsoberfläche des Substrates ausbildet. Ein solcher Film hat jedoch noch nicht die optimalen Eigenschaften hinsichtlich der Photoaktivität der Struktur aus Substrat und darauf gebildetem Film. Ferner ist die Struktur in dieser Form nur zum Einsatz bei einer photoelektrochemischen Solarzelle geeignet.

Um die Photoaktivitätseigenschaften der Halbleiter-Filmstruktur zu verbessern und das oberflächenmodifizierte Substrat für eine Arbeitselektrode sowohl einer photoelektrochemischen als auch einer photovoltaischen Solarzelle einsetzen sowie auch als Diode verwenden zu können, besteht die besondere Anpassung des Verfahrens gemäß der Erfindung darin, daß das Substrat nach jedem Ätz- und Spülvorgang in eine Elektrolytlösung getaucht und gleichzeitig belichtet wird, wobei das Substrat bei Belichtung in der Elektrolytlösung zyklisch zwischen zwei Potentialgrenzen polarisiert wird, und daß nach mehrfacher Wiederholung dieses Vorganges das Substrat mit einer angelegten Spannung in der Nähe des Arbeitspunktes über eine längere Zeitdauer belichtet wird. Als Resultat des erfindungsgemäßen Verfahrens ergibt sich kontinuierlich eine gezielte Filmbildung auf der Arbeitsoberfläche des Substrates, wobei der Film zwar bei jedem Ätzvorgang teilweise wieder weggeätzt, aber bei jedem Polarisierungs- und Belichtungsvorgang wieder neu gebildet wird. Es entsteht also eine Heterostruktur. Das Ätzen und die Elektrolyt-Immersionszyklen präparieren die Oberfläche des Substrates derart, daß sodann bei Belichtung und einem angelegten festen Potential ein gezieltes Filmwachstum gewährleistet ist. Es wird somit auf elektrochemischem Weg ein p-n-Übergang hergestellt. Der Füllfaktor der Struktur ist gegenüber dem Füllfaktor bekannter Strukturen erheblich größer. Die nach dem erfindungsgemäßen Verfahren hergestellte Struktur kann, wie gewünscht, sowohl für photoelektrochemische Solarzellen in einem Elektrolyten als auch für photovoltaische Solarzellen und schließlich auch für Dioden eingesetzt werden.

Vorteilhafte Weiterbildungen des Verfahrens sind durch die Merkmale der betreffenen Unteransprüche gekennzeichnet.

Die Erfindung ist nachfolgend anhand von mehreren Ausführungsformen von photoelektrochemischen Solarzellen und einem Verfahren zur Herstellung einer Arbeitselektrode für Solarzellen näher erläutert. In den Zeichnungen sind Einzelheiten, die für die Ausführungsformen der Erfindung von Bedeutung sind, schematisch dargestellt. Dabei zeigen :

Fig. 1 : den Aufbau und die Funktionselemente einer photoelektrochemischen Solarzelle ;

Fig. 2 : den Aufbau einer Arbeitselektrode in einer ersten Ausführungsform mit Kontaktierung und Anschlußdraht ;

Fig. 3 : ein Schaubild für den Verlauf der Photostromdichte, dim. $mA/cm^2$, über der umgesetzten Ladungsmenge, dim. $Coulomb/cm^2$, bei einer Solarzelle nach Fig. 2 ;

Fig. 4 : die Leistungskurve für Photostrom, dim. $mA/cm^2$ über Photospannung, dim. V, einer photoelektrochemischen Solarzelle nach Fig. 2 ;

Fig. 5 : den Aufbau einer Arbeitselektrode mit Kontaktierung und Anschlußdraht in einer zweiten Ausführungsform ;

Fig. 6 : den Aufbau einer Arbeitselektrode für eine photovoltaische Solarzelle als eine dritte Ausführungsform

und Fig. 7 : ein Energiebanddiagramm des p-n-Überganges bei einer Solarzelle nach Fig. 5 und 6.

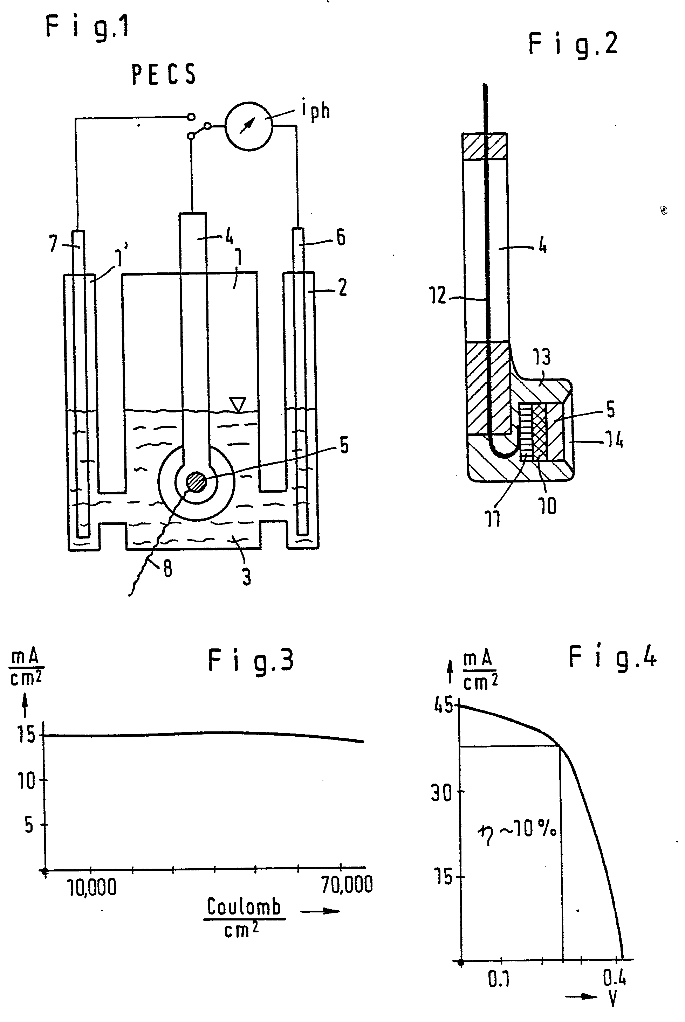

Die in Fig. 1 dargestellte photoelektrochemische Solarzelle PECS besitzt eine Kammer 1, in der sich die Arbeitselektrode 4 befindet, eine Nebenkammer 1' mit einer Referenzelektrode 7, die für wissenschaftliche Untersuchungen des Umwandlungsvorganges dient, aber für die Funktion der Solarzelle PECS als Wandler von Lichtenergie in elektrische Energie nicht erforderlich ist, und eine Kammer 2 mit der Gegenelektrode 6. Die Gegenelektrode 6 und auch die Referenzelektrode 7 bestehen z. B. aus einem Kohlenstoffstab. In den Kammern 1, 1', 2 befindet sich die Elektrolytlösung 3, die die Elektroden 4, 6, 7 zumindest teilweise benetzt. Am benetzten Ende der Arbeitselektrode 4 ist ein Halbleiterplättchen 5 angebracht, das von einem Lichtstrom 8 bestrahlt wird.

Bei Belichtung von $n-CuInSe_2$ als Halbleiterplättchen 5 in einer Elektrolytlösung 3, z. B.

J⁻/J₃⁻—HJ—Cu⁺ Lösung, oxidieren an der Arbeitselektrode 4 Defektelektronen H⁺ das J⁻ zum Endprodukt J₃⁻. An der Gegenelektrode 6 wird J₃⁻ zu J⁻ reduziert. Im äußeren Stromkreis dieser regenerativen Zelle fließt dann der Photostrom $i_{ph}$.

In Fig. 2 ist der Aufbau einer Arbeitselektrode 4 mit der Kontaktierung des Halbleiterplättchens 5 im Querschnitt dargestellt. Zwischen der Rückseite des Halbleiterplättchens 5 und dem Anschlußdraht 12 sind eine Schicht 10 aus Hg-In Amalgam und eine Ag-Kunstharz-Schicht 11 aufgebracht. Der Anschlußdraht 12 ist an oder in der Kunstharzschicht 11 befestigt und wird, elektrisch isoliert und korrosionsbeständig abgeschlossen, nach außen geführt. Das komplett kontaktierte Halbleiterplättchen 5 der Arbeitselektrode ist, ebenfalls elektrisch isolierend und korrosionsbeständig eingeschlossen, von einer geeigneten Masse 13, z. B. Epoxy-Harz, Glas oder einem Silikon-Kautschuk, umschlossen. Die Oberfläche des Halbleiterplättchens 5 muß mit der Elektrolytflüssigkeit unmittelbar in Kontakt kommen ; beim Einhüllen, Einschmelzen oder dgl. mit der Masse 13' ist also darauf zu achten, daß eine Fensteröffnung 14 offen bleibt.

Das in der Fig. 3 dargestellte Schaubild zeigt das Ergebnis einer Stabilitäts- und Leistungsmessung. Diese wurde in potentiostatischer Anordnung mit einer n-CuInSe₂/2,5 M HJ, 1 M CaJ₂, 60 mM J₂ und 20 mM CuCl — Paarung durchgeführt. Als Gegenelektrode 6 und als Referenzelektrode 7 fanden Kohlenstoffstäbe (spektrale Qualität) Verwendung. Zur Belichtung wurde weißes Licht einer Wolfram-Jod Lampe verwendet. Wie Fig. 3 zeigt, tritt praktisch keine Variation des Photostroms, dim. mA/cm², über 70 000 Cb/cm² auf.

Für die Bestimmung des Wirkungsgrades der photoelektrochemischen Solarzelle PECS, deren Ergebnis der Fig. 4 zu entnehmen ist, wurden die Messungen an einem Sonnensimulator der Fa. Oriel Corp. durchgeführt. Der Simulator ist mit einer 1 000 W Höchstdrucklampe ausgerüstet und erlaubt das Zwischenschalten von Filtern, die die jeweils gewünschte spektrale Zusammensetzung des Lichts — AM 0, AM 1, AM 2 — simulieren. Die Messung erfolgte unter AM 1 Bedingungen mit 101 mW/cm² Lichtintensität. Der maximale Arbeitspunkt der Solarzelle liegt bei ca. 38 mA/cm², die Spannung beträgt dabei etwa 0,25 V. Daraus folgt für den Wirkungsgrad

$$\eta = \frac{0{,}38 \text{ mA/cm}^2 \cdot 0{,}25 \text{ V}}{101 \text{ mW/cm}^2} = 9{,}4\,\%$$

In « Nature », Band 305, 13. Okt. 1983, Seiten 615-616, sowie in einem Beitrag im Rahmen der 34th ISE Meeting, Erlangen (Sept. 1983), wurde von den hier beteiligten Erfindern über ihre Arbeiten und Ergebnisse auf diesem Gebiet berichtet.

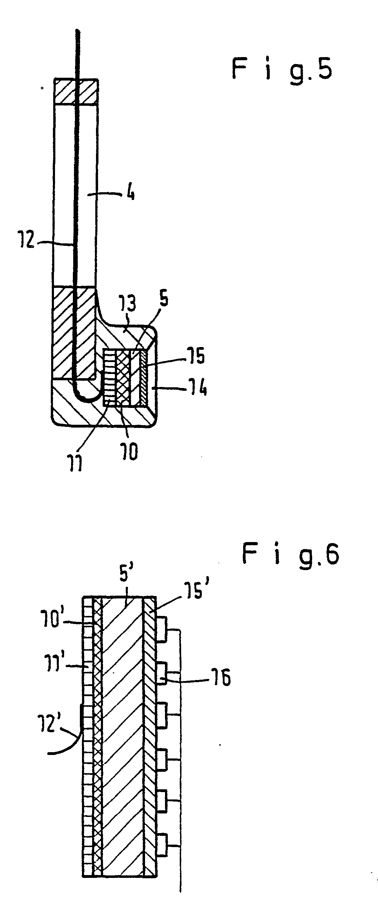

Der Aufbau der Arbeitselektrode einer photoelektrochemischen Solarzelle in einer zweiten Ausführungsform nach Fig. 5 entspricht weitgehend dem Aufbau der Arbeitselektrode in der ersten Ausführungsform nach Fig. 2. Als Ausgangsmaterial für das Halbleiterplättchen 5 wird ein einkristallines Kupfer-Indium-Selenid (CuInSe₂) verwendet. Hiervon wird das dünne Plättchen 5 von etwa 0,5 mm Dicke abgesägt und gemäß Fig. 5 in die Arbeitselektrode 4 eingesetzt. Zur Optimierung der Photoaktivitätseigenschaften der Halbleiter-/Filmstruktur lassen sich folgende Maßnahmen anwenden :

Das in der Arbeitselektrode eingebettete Halbleiterplättchen 5 wird geätzt mit Königswasser, z. B. bestehend aus zwei Teilen HCL und einem Teil HNO₃. Anschließend erfolgen nacheinander ein Abspülen in ionendestilliertem Wasser, ein Neuätzen mit 10 % KCN (Zyankali) und ein erneuter Spülvorgang mit ionendestilliertem Wasser.

Die Arbeitselektrode 4 wird anschließend gemäß Fig. 1 in die Elektrolytlösung 3 eingetaucht, bei welcher es sich z. B. um eine J⁻/J₃⁻—HJ—Cu⁺-Lösung (Redoxelektrolyt) handelt. Dann wird der Kontakt mit der Referenzelektrode 7 geschlossen, um genau definierte Spannungen einstellen zu können, z. B. zwischen 0 V und dem Photopotential 0,42 V. Ein zyklisches Polarisieren des Substrates, d. h. des in die Arbeitselektrode 4 eingebetteten Halbleiterplättchens 5, findet durch ein Hin- und Herfahren zwischen den genannten Potentialen statt. Dabei erfolgt eine Belichtung des Halbleiterplättchens 5 mit einem Lichtstrom 8, welcher mittels einer Wolfram-Jod-Lampe (Quarz-Halogen-Lampe) erzeugt wird. Hierbei beginnt der Film 15 auf der Oberfläche des Halbleiterplättchens 5 zu wachsen.

Danach wird die Arbeitselektrode 4 der Elektrolytlösung 3 wieder entnommen, mit ionendestilliertem Wasser abgespült und anschließend, wie vorher beschrieben, geätzt. Sodann findet wieder ein zyklisches Polarisieren im Redoxelektrolyten 3 statt. Diese Prozedur wird mehrmals wiederholt. Die kontinuierliche Bildung des Filmes 15 besteht bei jedem Vorgang darin, den vorhandenen Film 15 teilweise wegzuätzen und wieder neu zu bilden, um die Oberfläche für die abschließende gezielte Filmbildung zu präparieren. Dazu wird die Arbeitselektrode 4 im Redoxelektrolyten für einige Stunden bei einer angelegten Spannung in der Nähe des Arbeitspunktes (≈ 0,25 V) belichtet, wobei die endgültige Bildung des Films 15 stattfindet. Es hat sich als besonders günstig erwiesen, sodann die dem Redoxelektrolyten 3 entnommene, abgespülte und mit N₂ getrocknete Arbeitselektrode 4 in Luft von 150 °C für kurze Zeit, z. B. 15 Minuten zu tempern. Hierdurch lassen sich deutliche Verbesserungen der Zellparameter erzielen, insbesondere eine Verbesserung des Füllfaktors.

Die Fig. 6 zeigt eine photovoltaische Solarzelle. In gleicher Weise wie bei der photoelektrochemischen Solarzelle gemäß Fig. 5 ist das n-CuInSe₂-Halbleiterplättchen 5' auf der Rückseite mit einer Schicht 10' aus Hg-In Amalgam und einer Ag-Kunstharzschicht 11' versehen, auf welcher ein Kupferdraht 12' befestigt ist. Der Frontkontakt 16 wird durch Aufdampfen eines Gitters eines Metalles mit hoher Austrittsarbeit, z. B. Au auf der p-Typ-Filmschicht 15', hergestellt.

Es wird somit die Umwandlung von solarer Energie (Lichtstrom 8) in elektrische Energie mittels einer Heterostruktur (pn-n-Übergang) zwischen zwei unterschiedlichen Halbleitermaterialien, nämlich n-CuIn$Se_2$ und der p-Typ-Filmschicht 15' ermöglicht, wobei ein I-III-VI$_2$-Chalkopyrit-Halbleiter als Substrat verwendet wird. Auf diesem wird der Film 15 geformt, der zur Ausbildung des p-n Überganges führt. Der Vorteil besteht in einem sehr hohen Potential des CuInSe$_2$-Ausgangsmateriales zur effizienten Sonnenenergieumwandlung, sowie in der Möglichkeit, durch elektrochemische Kontrolle das Wachstum der Heterostruktur gezielt zu beeinflussen.

Die grundlegenden Eigenschaften der gemäß den Ausführungsformen nach Fig. 5 und 6 hergestellten Solarzellen werden nachfolgend erläutert.

Das neue Verfahren zur Bildung einer Heterostruktur durch photoelektrochemische Oberflächenumwandlung von Halbleitern beruht auf dem Wachstum einer neuen Halbleiterphase an der Grenzfläche von n-CuInSe$_2$/J$^-$—J$_3^-$—Cu$^+$ und wird durch kontrolliertes Einstellen elektrochemischer Parameter durchgeführt. Die Zwischenschicht wird als CuJSe$_3$—Se$^0$ Film identifiziert und zeigt p-Typ-Leitfähigkeit. Unter Belichtung erlaubt die Zwischenschicht einen ausreichenden Ladungstransport zwischen CuInSe$_2$ und dem J$^-$/J$_3^-$-Redoxpaar und verhindert zugleich die Auflösung des Halbleiters (n-CuInSe$_2$).

Das gegenwärtige Interesse an CuInSe$_2$ resultiert aus seinen ausgezeichneten optoelektronischen Eigenschaften, die zur Entwicklung von leistungsfähigen Festkörper-Solarzellen und photoelektrochemischen Solarzellen geführt haben. Das Verhalten der photoelektrochemischen Solarzellen hängt vom Wachstum eines Filmes ab, das durch geeignete Einstellung der Zusammensetzung des Elektrolyten erreicht wird.

Die Filme wurden auf geätzten (11$\bar{2}$) — Oberflächen von n-CuInSe$_2$ mittels Einsatz als Photoanoden in einem Elektrolyten hergestellt, welcher aus 1 M J$^-$, 0,05 M J$_2$, 0,02 M CuJ und 2 M HJ besteht. Eine Betrachtung dieser Oberflächen unter dem Rasterelektronenmikroskop (SEM) zeigt, daß ein polykristalliner Film gewachsen ist, der aus ungeordneten, flachen, hexagonalen Kristalliten besteht. Die Kristallitabmessungen liegen zwischen 2-5 μm. Die definierte Kristallgeometrie legt nahe, daß eine chemisch genau bestimmte Verbindung an der Grenzfläche zwischen dem CuInSe$_2$ und dem Elektrolyten gewachsen ist. Bei Röntgenbeugung unter streifendem Einfall werden die Kristallite der neuen Phase dahingehend identifiziert, das diese aus CuJSe$_3$—Se$^0$ und elementarem Selen (Se) bestehen. Es wurde kein Hinweis auf die Bildung von polykristallinem Kupferjodid (CuJ) gefunden. Die gute Übereinstimmung der relativen Maxima des Filmes und der ermittelten Pulver- Beugungsdaten schließen eine bevorzugte Orientierung in der Oberflächenschicht aus.

Eine differentielle Kapazitätsmessung der Struktur ergibt ein lineares Mott — Schottky-Verhalten im Bereich von ungefähr 0,3 V und erlaubt die Extrapolation des Flachbandpotentiales $V_{FB}$. Der erhaltene Wert $V_{FB}$ = — 0,28 V, der gegen die Referenzelektrode (gesättigte Kalomelelektrode) gemessen wird, ist unabhängig von der Modulationsfrequenz.

Eine an der Oberfläche eines unbehandelten CuInSe$_2$ Einkristalles durchgeführte ultraviolett-photoelektronische Spektroskopie (UPS) wird mit den an der Heterostruktur ermittelten Daten verglichen. Die Lage des Fermi-Niveaus und der Valenzbandkanten wird von den Energieverteilungskurven N(E) abgeleitet. Die Energieskalen sind relativ zueinander um den Unterschied in der Austrittsarbeit verschoben, um ein Ausrichten im Hinblick auf das Vakuumniveau zu erreichen. Die Kante des Valenzbandes $E_{VB}$ erscheint bei gleicher Energie für beide Proben, wogegen die Fermi-Niveaus $E_F^j$ sich um 0,65 eV unterscheiden. Für CuInSe$_2$ erhält man $|E_F^j - E_{VB}^n|$ = 0,85 eV und für CuJ-Se$_3$—Se$^0|E_F^p - E_{VB}^p|$ = 0,2 eV. Mit der Bandlücke $E_G$ = 2 eV wird der CuJSe$_3$—Se$^0$ Film als p-leitender Halbleiter bestimmt. Der photoaktive Kontakt wird an der Grenzfläche zwischen n-CuInSe$_2$ und p-CuJSe$_3$—Se$^0$ lokalisiert. Die Photospannung $V_{photo}$, die an der elektrochemischen n-CuInSe$_2$/J$^-$—J$_2$—Cu$^+$—HJ/C-Solarzelle zu 0,42 B beobachtet wird, weist darauf hin, daß das Kontaktpotential am p-n-Übergang abfällt.

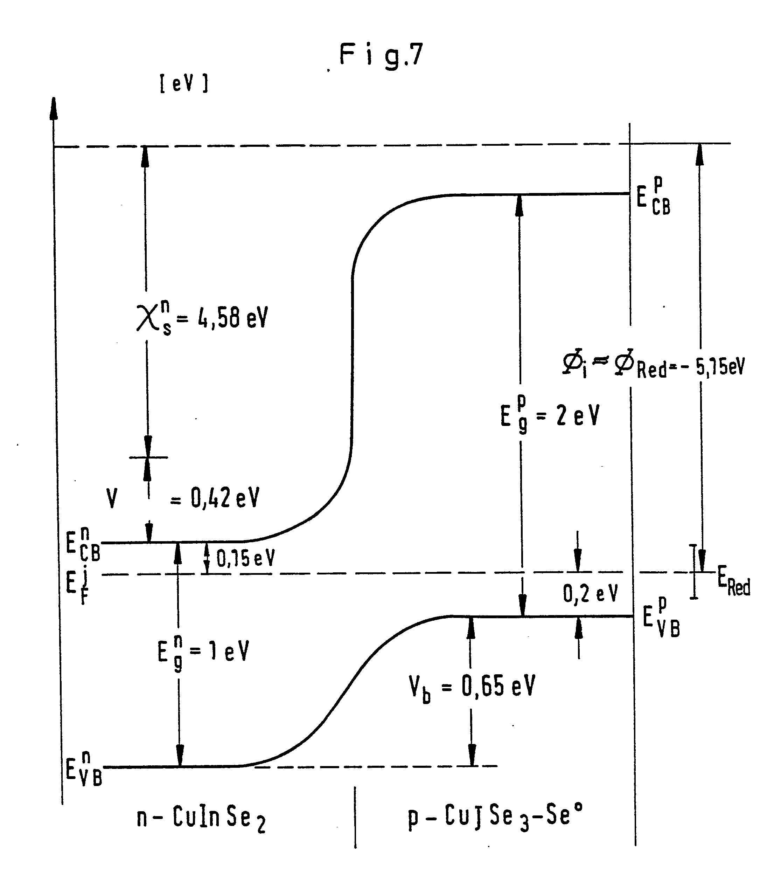

Die Fig. 7 zeigt ein schematisches Energiebanddiagramm des Kontaktüberganges zwischen n-CuInSe$_2$ und p-CuJSe$_3$—Se$^0$. Die Elektronenaffinität für CuInSe$_2$, $\chi_s^n$ von 4,58 eV, die gemessene Photospannung $V_{photo}$ von 0,42 V und der Abstand des Leitungsbandes vom Fermi-Niveau $E_{CB}^n - E_F^j = E_g^n - |E_F^j - E_{VB}^n|$ = 0,15 eV lokalisiert das Fermi-Niveau des p-n-Überganges bei $\varphi_j$ = — 5,15 eV. Das Redoxpotential von $E_{Red}$ = + 0,2 (SCE) entspricht einer Austrittsarbeit des Redoxpaares von $\varphi_{Red}$ = — 5,15 eV unter der Annahme, daß die Austrittsarbeit der Normalwasserstoff-Elektrode (NHE) bei — 4,7 eV liegt. Die Übereinstimmung zwischen $\varphi_j$ und $\varphi_{Red}$ weist auf die Existenz eines ohmschen Kontaktes an der Grenzfläche zwischen der Heterostruktur und dem Elektrolyten hin. Der Wert des Flachbandpotentials $V_{FB}$ = — 0,28 V (SCE) entspricht ungefähr 0 V (NHE), d. h. $E_F$ = — 4,73 eV. Wenn man $\chi_s^n$ = 4,58 eV und $E_{CB}^n - E_F^j$ = 0,15 eV addiert, erhält man $E_F^j$ = — 4,73 eV. Dies bedeutet eine sehr gute Übereinstimmung von elektrochemischen und Oberflächenanalyse-Ergebnissen.

Entsprechend der zur Zeit noch nicht bestimmten Ladungsträgerkonzentration in CuJSe$_3$—Se$^0$ wird erwartet, daß das ursprüngliche Kontaktpotential größer als 0,65 eV ist, da dieser Wert durch Vergleich der CuInSe$_2$-Probe mit dem bereits gebildeten Kontakt CuInSe$_2$ + Film erhalten wurde.

Chemische Reaktionen des belichteten $CuInSe_2$ mit den Bestandteilen des Elektrolyten wandeln die Oberfläche des Halbleiters um und erzeugen den p-n-Übergang. In Abwesenheit von $Cu^-$ wurden im Elektrolyten CuJ und elementares Selen ($Se^0$) auf den photo-korrodierten $CuInSe_2$ Oberflächen gefunden. CuJ ist teilweise löslich in den Jodidlösungen und bildet $CuJ_2^-$. Unter Zugabe von $Cu^+$ zur Lösung erhöht sich die Oberflächenkonzentration von $CuJ_2^-$ auf einen kritischen Wert, der erforderlich ist, um das $CuJSe_3$-Filmwachstum zu initiieren. Die Reaktanden CuJ, HJ und Se, welche bei der hydrothermischen Synthese von $CuJSe_3$ verwendet werden, werden somit vom Elektrolyten und den Halbleiterkomponenten in der Zelle bereitgestellt, während die Reaktions-Enthalpie durch das Photopotential geliefert wird.

**Patentansprüche**

1. Photoelektrochemische Solarzelle (PECS) mit einem Wirkungsgrad von etwa 10 % für die Umwandlung von Lichtenergie in elektrische Energie und einer unter diesem Aspekt ausgewählten Paarung von Halbleiter-Material für die Arbeitselektrode und Zusammensetzung der Elektrolytflüssigkeit, gekennzeichnet durch eine ternäre Verbindung der Materialsysteme $CuInSe_2$ oder $CuInS_2$, einschließlich der Homogenitätsbereiche und in-situ erzeugter Oberflächenmodifizierungen dieser Verbindungen, für die Arbeits-Elektrode, und eine Jod-Jodidlösung, vorzugsweise mit einem Stabilisator aus einem Übergangsmetallhalogenid, für die Elektrolytlösung.

2. Solarzelle nach Anspruch 1, gekennzeichnet durch ein- oder polykristallines Halbleitermaterial für die Arbeits-Elektrode.

3. Solarzelle nach Anspruch 1 oder 2, gekennzeichnet durch eine Kontaktierung der Arbeitselektrode, die auf der Rückseite des Halbleiterplättchens aus Hg-In-Amalgam und einem Ag-Kunstharz mit dem dort befestigten Anschlußdraht gebildet ist.

4. Solarzelle nach einem der Ansprüche 1 bis 3, gekennzeichnet durch eine wäßrige Elektrolytlösung, die 2,5 M HJ, 1 M $CaJ_2$, 60 mM $J_2$ und mindestens 15 mM $Cu^+$ enthält.

5. Verfahren zur Herstellung einer Arbeitselektrode für photoelektrochemische und photovoltaische Solarzellen, bei dem zur Ausbildung eines Filmes auf der Arbeitsoberfläche eines Substrats ein einkristallines Chalkopyrit-Halbleitermaterial, insbesondere $CuInSe_2$, oder ein polykristallines Chalkopyrit-Halbleitermaterial mehrfach, insbesondere mit Königswasser geätzt und anschließend abgespült wird, insbesondere mit ionendestilliertem Wasser, dadurch gekennzeichnet, daß das Substrat nach jedem Ätz- und Spülvorgang in eine Elektrolytlösung getaucht und gleichzeitig belichtet wird, wobei das Substrat bei Belichtung in der Elektrolytlösung zyklisch zwischen zwei Potentialgrenzen polarisiert wird, und daß nach mehrfacher Wiederholung dieses Vorganges das Substrat mit einer angelegten Spannung in der Nähe des Arbeitspunktes über eine längere Zeitdauer belichtet wird.

6. Verfahren nach Anspruch 5, dadurch gekennzeichnet, daß die Potentialgrenzen zwischen 0 und 0,42 V liegen.

7. Verfahren nach Anspruch 5 oder 6, dadurch gekennzeichnet, daß der Arbeitspunkt bei 0,25 V liegt.

8. Verfahren nach einem der Ansprüche 5 bis 7, dadurch gekennzeichnet, daß die Zeitdauer für die Belichtung mehrere Stunden beträgt.

9. Verfahren nach einem der Ansprüche 5 bis 8, dadurch gekennzeichnet, daß das Substrat anschließend in Luft getempert wird.

**Claims**

1. Photoelectrochemical solar cell (PECS) having an efficiency of approximately 10 % for converting light energy into electrical energy and having a combination, selected from this aspect, or semiconductor material for the working electrode and composition of the electrolyte fluid, characterised by a ternary compound of the material systems of $CuInSe_2$ or $CuInS_2$, including the homogeneity areas and in situ produced surface modifications of these compounds, for the working electrode, and an iodine-iodide solution, preferably with a stabilizer consisting of a transition metal halogenide, for the electrolyte solution.

2. Solar cell according to claim 1, characterised by single or poly-crystalline semiconductor material for the working electrode.

3. Solar cell according to claim 1 or 2, characterised by a contacting of the working electrode, which is formed on the reverse side of the small semiconductor plate of Hg-In-amalgam and an Ag-synthetic resin with the connection wire secured there.

4. Solar cell according to one of the claims 1 to 3, characterised by an aqueous electrolyte solution which contains 2.5 M HI, 1 M $CaI_2$, 60 mM $I_2$ and at least 15 mM $Cu^-$.

5. Process of making a working electrode for photoelectrochemical and photovoltaic solar cells, wherein, for the purpose of developing a film on the working surface of a substrate, a single crystalline chalcopyrite semiconductor material, more particularly $CuInSe_2$, or a poly-crystalline chalcopyrite semiconductor material, is etched repeatedly, more particularly with aqua regia, and is subsequently rinsed, more particularly with deionized water, characterised in that the substrate is immersed, after each etching and rinsing process, into an electrolyte solution and is simultaneously illuminated, in which case the substrate upon illumination in the electrolyte solution is polarized cyclically between two potential limits, and in that, after repetition of this process several times, the substrate is illuminated with an applied voltage near the working point over a longer period of time.

6. Process according to claim 5, characterised in that the potential limits lie between 0 and 0.42 V.

7. Process according to claim 5 or 6, characterised in that the working point lies at 0.25 V.

8. Process according to one of the claims 5 to 7, characterised in that the period of time for illumination amounts to several hours.

9. Process according to one of the claims 5 to 8, characterised in that the substrate is subsequently tempered in air.

**Revendications**

1. Cellule solaire photoélectrochimique avec un rendement d'environ 10 %, pour la transformation de l'énergie lumineuse en énergie électrique et avec un appariement, choisi sous ce rapport, d'un matériau semi-conducteur pour l'électrode de travail et de la composition du liquide électrolytique, caractérisée par une combinaison ternaire des systèmes de matières $CuInSe_2$ ou $CuInS_2$, y compris les régions d'homogénéité et les modifications de surface engendrées in situ de ces composés, pour l'électrode de travail et une solution iode-iodure, de préférence avec un stabilisateur constitué par un halogénure de métal de transition pour la solution électrolytique.

2. Cellule solaire suivant la revendication 1, caractérisée par un matériau semi-conducteur monocristallin ou polycristallin pour l'électrode de travail.

3. Cellule solaire suivant la revendication 1 ou 2, caractérisée par une mise en contact de l'électrode de travail, qui est formée à la face arrière de la plaquette semi-conductrice en un amalgame Hg-In et une résine synthétique à l'argent avec le fil de raccordement qui est fixé en cet endroit.

4. Cellule solaire suivant l'une des revendications 1 à 3, caractérisée par une solution électrolytique aqueuse qui contient 2,5 M de I, 1 M de $CaI_2$ et 60 mM de $I_2$ et au moins 15 mM de $Cu^-$.

5. Procédé de fabrication d'une électrode de travail pour des cellules solaires photoélectrochimiques et photovoltaïques, dans lequel, pour la formation d'une pellicule sur la surface active d'un substrat, un matériau chalcopyritique semi-conducteur monocristallin, en particulier $CuInSe_2$, ou un matériau chalcopyritique semi-conducteur polycristallin, est attaqué en particulier par de l'eau régale et est ensuite rincé, en particulier par de l'eau désionisée, caractérisé en ce que le substrat, après chaque processus d'attaque et de rinçage, est plongé dans une solution électrolytique et est en même temps illuminé, le substrat, lors de l'illumination dans la solution électrolytique, étant polarisé cycliquement entre deux limites de potentiel ; et en ce qu'après une répétition multiple de ce processus, le substrat est illuminé pendant une durée relativement longue avec application d'une tension à proximité du point de travail.

6. Procédé suivant la revendication 5, caractérisé en ce que les limites de potentiel se situent entre 0 et 0,42 V.

7. Procédé suivant la revendication 5 ou 6, caractérisé en ce que le point de travail se situe à 0,25 V.

8. Procédé suivant l'une des revendications 5 à 7, caractérisé en ce que la durée d'illumination atteint plusieurs heures.

9. Procédé suivant l'une des revendications 5 à 8, caractérisé en ce que le substrat est ensuite recuit dans l'air.

Fig.1

PECS

Fig.2

Fig.3

Fig.4

Fig.5

4

12

13 5

15

14

11 10

Fig.6

5'

15'

10'

11'

16

12'

2

# F i g.7